# EUROPEAN PATENT APPLICATION

(11) **EP 3 993 554 A1**
(43) Date of publication of application: **04.05.2022**
(21) Application number: 20204051.5
(22) Date of filing: 27.10.2020
(51) Int. Cl.: H04W 76/16

(54) **QOS ALIGNMENT FOR NON-3GPP TETHERING**

(71) Applicant: IPCom GmbH & Co. KG, 82049 Pullach (DE)
(72) Inventor: HANS, Martin, 31162 Bad Salzdetfurth (DE)
(74) Representative: Tomlinson, Edward James

(57) **Abstract**

The present invention provides a method of establishing a connection of a communication device to a communications network over a non-3GPP interworking function, N3IWF, entity the method comprising a user equipment, UE, device establishing a connection with the communication device; receiving at the UE device a registration request from the communication device, the registration request indicating that the communication device requires a connection to the N3IWF entity, establishing a connection of the UE device to a first data network providing access to the N3IWF and a connection of the communication device to the data network via the connection of the UE device to the first data network, and adapting a quality of service setting of the connection of the UE device to the communications network to take into account a quality of service requirement for the connection of the communication device to the first data network via the UE device..

## Description

The present invention relates to aligning quality of service (QoS) settings when one user equipment (UE) device is tethered to another.

Current cellular mobile communication systems offer connections for UE devices to a public land mobile network (PLMN) via a variety of access networks (AN). Radio access networks (RAN) are usually part of the PLMN, deployed and maintained by the operator of the PLMN and therefore trusted. Examples of access technologies of RANs are UMTS (3G), LTE (4G) and New Radio (NR, 5G). In addition, PLMNs offer access via external networks, that are not part of the PLMN and whose access technology is not specified by 3GPP. The access type is then called "non-3GPP access". In the usual case in which there is no trust relationship between a PLMN and the non-3GPP AN (N3-AN), the access is also called "untrusted non-3GPP access". Typical examples for such non-3GPP access technologies are Wi-Fi (also called WLAN) or fixed broadband access.

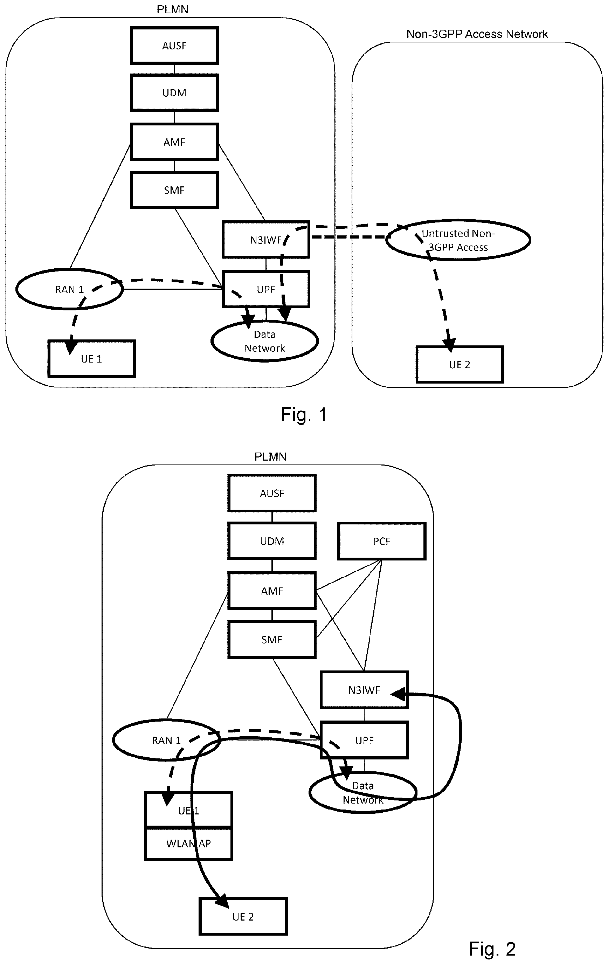

The 5G architecture for non-3GPP access is depicted in Fig. 1. A PLMN is shown with its most important core network entities. These are the authentication and security function (AUSF), the universal data management (UDM), comprising for example a subscriber database, and an authentication and mobility function (AMF). The main functions of these entities are the registration of UE devices in the core network including authentication, authorization and enabling UE device mobility throughout the network. Further, the PLMN has user plane functions (UPFs) for each connection of a UE device to a data network and session management functions (SMFs) managing user data connections of devices through the core network, including the data routing and QoS aspects. Such a data connection is called PDU session in the 5G architecture defined by 3GPP. A PDU session is a logical connection between a UE device via an access network to a UPF at the edge of the mobile network. A PDU session has a defined QoS for the data transfer, for example an average, maximum or guaranteed bit rate and a packet delay budged setting the target for the latency the data experiences over the PDU session. Also, for a PDU session, the UE device is configured an IP-address that is used as source IP-address for all traffic sent by the UE device and it is used in downlink as destination address to address the UE device. The IP address is typically allocated by the edge UPF from the target network address space. Otherwise, a local IP address may be allocated, and network address translation may be used to translate the local into a globally routable address used by the edge UPF for traffic outside the mobile network. In an exemplary manner a single UE device (UE 1) is depicted connected to the PLMN via a radio access network (RAN 1). A dashed line shows a single user plane connection, PDU session, between the UE device and a data network, for example the internet, via a UPF.

An untrusted non-3GPP access network is connected via a non-3GPP interworking function (N3IWF) with the PLMN. The path of the user data between a UE device (UE 2) connected to the non-3GPP AN, for example a public WLAN hotspot, and via the non-3GPP AN to a data network of the PLMN via the N3IWF and a UPF is also depicted in Fig. 1. The UE device is controlled by an AMF in the PLMN while the non-3GPP access network is not controlled by the PLMN. Fig. 1 is simplified in various aspects, for example the UPFs, SMFs and AMFs serving UE 1 and UE 2 are likely to be different entities of which only one is shown in the figure. As one PLMN offers connections to a variety of different data networks, the PDU sessions may connect to different data networks. Also, UE 1 and UE 2 may well be the same UE device, i.e. a single device that has a cellular transceiver for connecting to a RAN and a non-cellular transceiver, for example a WLAN module, to access to a public hot spot. In that case, the UE device would be served by a single AMF but still different SMFs and UPFs may manage and constitute the user data connections. The described non-3GPP access architecture was originally introduced to connect a UE device to a PLMN in parallel to an existing RAN connection to the same PLMN or only to a PLMN via non-3GPP access, for example if a RAN to the PLMN is not accessible.

The architecture relating to this invention is described in 3GPP TS 23.501 §§ 5.30.2.7 and 5.30.2.8.

The non-3GPP access to a PLMN requires the following functionality be performed to register a UE device in the PLMN, i.e. to access the core network from the UE device via an access network not controlled by the PLMN (N3-AN):
The UE acquires IP-connectivity from the N3-AN, i.e. it usually receives an IP address, later called outer IP address throughout this document, and gets access to the non-3GPP access network which connects the UE device to at least a N3IWF, for example via the internet. The UE device then performs a selection of an N3IWF based on a pre-configured selection policy.

The UE accesses the N3IWF via the non-3GPP access network and performs a key exchange with the N3IWF as described in IETF RFC 7296, Internet Key Exchange V2 (IKEv2) and 3GPP TS 23.502, §4.12.2 which are considered to be included in this description without repeating the procedures.

A security association (SA) in established between the UE device and the N3IWF which is essentially an encrypted tunnel between the UE device, represented by its current IP address and potentially a port number, and the N3IWF, represented by its current IP address and potentially a port number. Means for network address translation (NAT) traversal are included so that UE devices may establish a tunnel through the NAT, if applicable. If the UE device supports means for overcoming IP address changes as described in IETF RFC 4555, "IKEv2 Mobility and Multihoming Protocol (MOBIKE)", these means are setup as well.

The establishment of a security association (SA) include multiple steps, some of which are related to message exchanges from the UE device to the N3IWF. These include initial establishment of an encrypted tunnel, exchange of credentials, selection of an AMF by the N3IWF based on AMF selection policies of the network, authentication of the UE device in the core network involving the AMF, the AUSF and the UDM, and finally establishing IPsec security association for further exchange of NAS signalling messages via the IPsec tunnel between the UE device and the N3IWF and further to the selected AMF through the PLMN's core network.

Once the IPsec tunnel between UE and N3IWF is securely setup, the UE has a route that constitutes its logical connection to the AMF. The UE device is now controlled by the selected AMF and it may request the setup of connections to a data network via user plane functions (UPFs) over the N3-AN. For that purpose, PDU sessions are setup via the selected N3IWF and for each PDU session, a child security association may be established between the UE device and the N3IWF.

Throughout this document, any step within the process of setting up a security association, including sending a first request message from a device to the N3IWF, exchanging further messages for establishment of the security association and sending a registration request of similar message to an AMF of the PLMN, will be collectively described as sending a registration request or a request for registration by the device. No further distinction is made between the initial messages for setting up an IPSec tunnel and registration request messages addressed to the core network of the PLMN if not explicitly indicated.

This setup procedure is similarly or identically used in case the non-3GPP access network is provided by another UE device, for example via a tethering feature described as follows.

A non-3GPP access network may be provided by a wireless local area network (WLAN) access point connected to the internet via fixed network backhaul, for example a DSL or fiber connection. A common alternative is offering of a WLAN access point by a UE device using the UE device's mobile connection to a PLMN as backhaul. This concept is often referred to as tethering. The UE device providing the access point, in the following called WLAN-AP-UE device, may use existing connections (PDU sessions) as backhaul for transport of data to and from connected UE devices or it may request the establishment of new PDU sessions with QoS settings specific for the offered WLAN services. Fig. 2 shows an exemplary PLMN offering a connection via a radio access network (RAN 1) to a WLAN-AP-UE (UE 1). UE 1 may have one or more PDU sessions set up and shown as a dashed line arrow. UE 1 may offer a WLAN access point to devices nearby, for example UE 2. UE 2 may use the provided access to connect to the same PLMN via an N3IWF.

In the setup shown in Fig. 2 and in similar setups, the WLAN connection of UE 2 is untrusted because the PLMN does not have any knowledge about which entity and which devices offer the internet service to UE 2. The PLMN providing services to the WLAN-AP-UE device does not have information about the tethering service and connected devices and can thus not distinguish data originating from the connected UE device from data originating from the WLAN-AP-UE device.

Offering a WLAN access point from a WLAN-AP-UE device in the past has been used to connected devices like tablets and laptops, mainly for general internet access. In future, the feature may become even more important for 3GPP devices, i.e. devices with a PLMN subscription, that are restricted in power consumption, price or design, for example sensors or machine type devices. These may only have short range communication technologies like WLAN, ZigBee or Bluetooth low energy (BT LE) for communicating, but they may be 3GPP devices for accessing a PLMN. These devices need a short-range link to a gateway offering a connection that can be used by the connected UE device to connect to a N3IWF of the PLMN and establish a connection into the PLMN.

The feature may also be relevant for connected UE devices having a connection to a PLMN via a radio access network (RAN) of a PLMN and in parallel make use of a short-range connection offered by a near-by WLAN access point by a WLAN-AP-UE device for accessing the PLMN in parallel to the RAN via a N3IWF, for example for increasing quality or reliability of the connection. For parallel connections via 3GPP and N3GPP access the 3GPP system has means to provide the connected UE device with detailed policies for selecting which access leg, the RAN or the N3GPP access, is used for actual data transport in uplink. The selection may be for all data traffic, per connection (PDU session), per app or per packet and policies may be based on a determination of source and/or destination IP address, port number, source application, data type or the like. Similar policies are then also provided to the access router (UPF) for routing downlink data to the respective access leg.

In case the non-3GPP access is provided by a WLAN-AP-UE device, the backhaul of the device has impact on the quality of the non-3GPP connection offered to the connected UE device, yet without the PLMN being aware of the relation of the connections and thus without the PLMN being able to adapt the WLAN-AP-UE device's backhaul connection to the needs of connected UE device's connection or vice versa.

The present invention seeks to provide an enhancement of the 3GPP system for WLAN-AP-UE devices offering a short-range connection to connected UE devices efficiently enabling the system to utilize the relation of a backhaul connection of a short range access point offered by a WLAN-AP-UE device and the connection of a connected UE device to a N3IWF.

The invention is especially useful for but not limited to restricted backhaul connections of the WLAN-AP-UE device, for example if the backhaul is satellite based and thus suffers high latency or it is roaming and thus causes high costs to the PLMN and/or the user.

The present invention provides a method of establishing a connection of a communication device to a communications network over a non-3GPP interworking function, N3IWF, entity the method comprising a user equipment, UE, device establishing a connection with the communication device; receiving at the UE device a registration request from the communication device, the registration request indicating that the communication device requires a connection to the N3IWF entity, establishing a connection of the UE device to a first data network providing access to the N3IWF and a connection of the communication device to the data network via the connection of the UE device to the first data network, and adapting a quality of service setting of the connection of the UE device to the communications network to take into account a quality of service requirement for the connection of the communication device to the first data network via the UE device.

In one aspect the invention provides a method in which a first network entity (SMF) of a PLMN provides a service to a first UE device (UE 1), the first UE device (UE 1) having a connection to a radio access network of the PLMN. The first UE device (UE 1) is connected via a short-range connection (WLAN) with a second UE device (UE 2). The second UE device (UE 2) transmits via the short-range connection a request for registration addressed to a N3IWF of the PLMN. As a result, the first UE device (UE 1) requests the setup of a new connection to the addressed N3IWF from the first network entity (SMF). The first network entity (SMF), in response, provides information to a second network entity about the connection requested to a N3IWF, the information including an IP address of the first UE device (UE 1) associated with the requested connection, an address of the N3IWF to which a connection is requested and an identification of the connection (first PDU session) that is setup in response to the request for a connection to the N3IWF. The first UE device (UE 1) transmits the request for registration to the N3IWF via the requested connection (first PDU session) to the N3IWF.

The N3IWF, in response to receiving the request for registration of the second UE device (UE 2) transmitted by the first UE device (UE 1), registers the second UE device (UE 2) in the PLMN, thereby identifying a subscription of the second UE device (UE 2). The N3IWF provides information to the second network entity about a registration at the N3IWF, the information including an address from which the request for registration has been received and the now associated subscription.

The second network entity determines from the information about a connection requested to the N3IWF and the information about a registration at the N3IWF, that the connection of the second UE device (UE 2) to the N3IWF is provided via the first UE device (UE 1) and the connection (first PDU session) that was set up.

In other words, the procedure comprises four parts: Firstly, a registration of the second UE device (UE 2) at the N3IWF via the short-range connection to the first UE device (UE 1). Secondly, information provisioning to the second network entity by the first network entity (SMF) about a requested connection to the N3IWF. Thirdly, information provisioning to the second network entity by the N3IWF about a registration at the N3IWF. Fourthly, the second network entity derives, for example from a match of the address used for transmitting the request for registration and the address from which the request was received, that the non-3GPP access connection of the second UE device (UE 2) is provided by the first UE device (UE 1) via the first PDU session.

In one aspect of this invention, the PLMN adapts the QoS of the first PDU session to the QoS needs of the second UE device (UE 2). In another aspect, the PLMN adapts the QoS of further PDU sessions set up by the second UE device (UE 2) via the connection to the N3IWF to the QoS restrictions of the first PDU session of the first UE device (UE 1).

In a further aspect of this invention, the PLMN informs a charging (accounting) system of the PLMN about the usage of the first PDU session for connecting another subscriber and/or about the establishment of further PDU sessions set up by the second UE device (UE 2) via a first UE device (UE 1). This information may then be used by the charging system to adapt charging for the respective PDU sessions, e.g. for the data volume consumed over the PDU sessions or a time the PDU session are maintained.

In further aspects of this invention, the PLMN may alternatively or in addition change the charging for offered services, i.e. the subscriber of the first UE device (UE 1) is charged less or nothing for offering the WLAN-based connection over the first PDU session and/or the second UE device (UE 2) is charged for the service. It may even be that an amount of the respective accounts is transferred from the account of the subscriber of the second UE device (UE 2) to the subscriber of the first UE device (UE 1) as a result of the first UE device (UE 1) offering this service to the second UE device (UE 2).

In a further aspect of this invention, the second UE device (UE2) may be connected to the PLMN in parallel via the radio access network of the PLMN and via the WLAN connection to the first UE device. The PLMN configures the second UE device (UE 2) with policies that provide detailed rules about data from which applications or of which traffic type is to be routed via the radio access network and which goes via the WLAN connection. This feature is called "Access Technology Selection, Steering and Switching" (ATSSS) in the 3GPP environment.

According to this aspect of the invention the feature is enhanced to adapt the rules for data routing in the second UE device (UE 2) according to QoS parameters of the first PDU session of the first UE device (UE 1). As an example, if the first device is using a satellite-based connection for the first PDU session, the rules may request the second UE to route all uplink traffic that is delay sensitive via the radio access network directly. All delay tolerant data may be routed via the WLAN connection. In contrast, if the first UE device (UE 1) is connected via the radio access network and has good link quality, configured to use MIMO and/or carrier aggregation technology, while the radio access network connection of the second UE device (UE 2) is poor due to limited capabilities of that UE device's transceiver, the rules may force all uplink data to be routed via WLAN as long as it is available. A concept of this invention is to configure the rules for routing data in the second UE device (UE 2) according to QoS parameters of the respective backhaul first PDU session of the first UE device (UE 1).

This aspect of the invention may be further enhanced in that the second UE device (UE 2) is configured with alternative routing rules, i.e. a second set of routing rules and the second UE device (UE 2) is dynamically configured to switch between the original routing rules and alternative routing rules by the PLMN in dependence of current parameters of the first PDU session. A handover performed in the first UE device (UE 1) from a terrestrial connection used for the first PDU session to a satellite-based connection may then lead to a dynamic switch in UE 2 from one set of routing rules to another to reflect the changed QoS parameters of the first PDU session in the applied routing rules. The same principle may obviously be applied to more than two, i.e. three or more, sets of routing rules.

Similar or the same rules or multiple sets of rules may be configured in the edge router (UPF) for downlink traffic, so that dependent on the QoS of the connection between PLMN and the first UE device (UE 1) via the radio access network, downlink traffic routing to the second UE device (UE 2) is optimized.

In a further aspect of this invention, the QoS configuration of the first PDU session is adapted as a result of the second UE device (UE 2) requesting to set up a second PDU session via the non-3GPP connection based on the requested QoS parameters of the second PDU session. If the second PDU session has requested QoS parameters demanding a higher data rate or lower latency than the first PDU session can currently offer, also taking into account other WLAN connections that use the first PDU session for transport, the QoS parameters of the first PDU session are adapted or a further PDU session is set up to the first UE device (UE 1) in parallel to the first PDU session. Reduced QoS demands by a second PDU session or the release of such second PDU session may lead to reduced QoS parameters for the first PDU session.

A second procedure is very similar to the first procedure with a difference being that the N3IWF takes over some of the function which the second network entity has in the first procedure. The second procedure includes the following steps: A first network entity (SMF) of a PLMN providing service to a first UE device (UE 1). The first UE device (UE 1) is connected via a short-range connection (WLAN) with a second UE device (UE 2). The second UE device (UE 2) transmits via the short-range connection a request for registration addressed to a N3IWF of the PLMN. As a result, the first UE device (UE 1) requests the setup of a new connection to the addressed N3IWF from the first network entity (SMF). The first network entity (SMF), in response, providing information about the connection requested to the N3IWF to which the request for registration is addressed, the information comprising an IP address associated with the requested connection (first PDU session) of the first UE device (UE 1), and an identification of the connection (first PDU session) that is setup in response to the request for a connection to the N3IWF. The first UE device (UE 1) transmits the request for registration via the requested connection to the N3IWF.

The N3IWF, in response to receiving the request for registration of the second UE device (UE 2) transmitted by the first UE device (UE 1), registering the second UE device (UE 2) in the PLMN, thereby identifying a subscription of the second UE device (UE 2).

The N3IWF determining from the IP address associated with the requested connection of the first UE device (UE 1) and the address from which the request for registration has been received, and the associated subscription, that the connection of the second UE device (UE 2) to the N3IWF is provided via the first UE device (UE 1) and the first PDU session.

The determined information is then provided by the N3IWF to a second network entity, for example a PCF, in order for the PLMN to enable the beneficial aspects of this invention described with relation to the first procedure.

In both the first and second procedure, the second network entity may be a policy control function (PCF), a universal data management (UDM) function of an AMF. Alternatively, the PLMN has a newly created function dedicated to the determination of first PDU sessions and connections via N3IWFs.

The second network entity may be identical with the first network entity (SMF) so that the SMF serving the first UE device can configure that device. In another embodiment, the second network entity is the AMF of the first or second UE device (UE 1, UE 2) or the policy control function (PCF) responsible for the second UE device. In another embodiment the second network entity is an entity that may influence the SMF selection for the second UE device (UE 2) so that, in an SMF selection procedure for PDU sessions set up for data transfer following the registration of the second UE device (UE 2) in the PLMN, the SMF managing the first PDU session of the first UE device is selected. This allows an efficient optimization of the QoS settings of the first PDU session of the first UE devices (UE 1) and further PDU sessions of the second UE device (UE 2) as one SMF is managing all related PDU session and align can their common QoS accordingly.

In a further aspect of this invention, the PLMN has one or more SMFs dedicated for performing the procedures. When the first UE device (UE 1) requests a new PDU session triggered by the need to forward a request for registration received from the second UE device (UE 2), the SMF selection procedure may lead to selection of an SMF that is qualified for the procedures. Information received from the N3IWF about a registration at the N3IWF and/or the relation the first PDU session and the second UE device (UE 2) may lead to selection of the SMF for all subsequently established PDU sessions of the second UE device (UE 2).

A third procedure is now described focussing on the difference to previous procedures. The main aspect of the third procedure is the replacement of functions of the second network entity in previous procedures with a QoS alignment between the network entities managing the first and second UE devices (UE 1, UE 2). Again, a second UE device (UE 2) is connected to first UE device (UE 1) via a short-range connection and attempts to send a request for registration message addressed to an N3IWF. A first connection (first PDU session) is requested from a first network entity (AMF 1) and the PDU session setup procedure is performed in the PLMN. According to the invention, the first network entity (AMF 1) then requests from a subscriber data base (UDM) to be notified about future events with regards to a non-3GPP access of a second UE device having the source address that is used as source address for transmission of data over the newly established connection (first PDU session).

The first UE device (UE 1) forwards the request for registration over the first connection (first PDU session) to the addressed N3IWF and the second UE device subsequently registers at the PLMN over the short-range connection and the first connection involving a second network entity (AMF 2) managing the second network device in the PLMN. The second network entity (AMF 2), after the registration of the second UE device (UE 2), informs the subscriber data base (UDM) about the source address of the newly established registration of the second UE device (UE 2). The subscriber data base (UDM) notifies, as a result of the previous request, the first network entity (AMF 1) about the occurrence of a non-3GPP access with the source address for which the first network entity (AMF 1) requested notification and provides in the notification the identity of the second UE device (UE ID 2) and of the second network entity (AMF 2).

The first network entity (AMF 1) requests from the second network entity (AMF 2) to be notified about changes in QoS of the second UE device (UE 2) and the second network entity (AMF 2) in return requests from the first entity (AMF 1) to be notified about QoS changes of the first connection (PDU session).

In the event that the second UE device (UE 2) requests a new connection for data transfer or a modification of existing connections, the mutual requests for notification of the first and second network entities enable the network entities to align the QoS of the first connection (first PDU session) and QoS of the second UE device (UE 2) and its new or modified connections and thus ensures an efficient QoS configuration of the PLMN.

The first PDU session of the first UE device (UE 1) that was described to be for transport of all data to and from connected WLAN devices (UE 2) may in fact be a multitude of first PDU sessions, for example one for registration of connected UE device at the N3IWF (security association) and further PDU sessions for different traffic types send or received by the second UE device (UE 2), for example child security associations).

According to an additional aspect of the invention, the PLMN may configure the first UE device (UE 1) to request the setup of a new first PDU session for data that is addressed to a N3IWF to which currently no dedicated first PDU session is set up. For that purpose, a list of addresses of N3IWFs of the PLMN may be configured to the first UE device (UE 1). The first UE device (UE 1) then determines for an initial request for registration sent by the second UE device via the WLAN connection and addressed to a N3IWF of the PLMN that no dedicated first PDU session exists and requests from the PLMN the setup of a new first PDU session. The advantage of such a configuration is, that the PLMN, in particular the AMF responsible for the first UE device (UE 1), is made aware of the request for registration and can start the procedure described above. Otherwise, another trigger for determining a connection setup via tethering would be needed, for example the PLMN would provide means for determining the tethering connection setup from a data packet inspection, such as from the destination address of packets sent by the first UE device (UE 1). A determined first data packet sent by the first UE device (UE 1) to the N3IWF may trigger setup of a new PDU session for future communication with the N3IWF as described in previous aspects of this invention.

A PLMN may have multiple or a single N3IWFs. The above describes the general case of multiple N3IWFs. In PLMNs with only a single N3IWF or if only a single N3IWF address is used to address multiple entities (with a load sharing mechanism independent of the address implemented in the PLMN), the N3IWF address may be omitted from the information provided by the first network entity (SMF).

This invention describes various procedures under the assumptions that the first and second UE devices (UE 1, UE 2) are all registered in and the N3IWF and the radio access network all belong to the same PLMN. However, this assumption is only chosen for descriptive purposes. Nothing in this invention should prevent the entities to register or belong to different PLMNs and the procedures are implemented over inter-PLMN interface that allow the described or similar interaction.

Preferred embodiments of the invention will now be described, by way of example only, with reference to the accompanying drawings in which:
- Fig. 1: shows an arrangement in which a non-3GPP access network is connected with a PLMN;
- Fig. 2: shows a tethering arrangement for connecting a device to a PLMN;
- Fig. 3: is a message sequence chart for a first embodiment of the invention;
- Fig. 4: is a message sequence chart for a second embodiment of the invention; and
- Fig. 5: is a message sequence chart for a third embodiment of the invention.

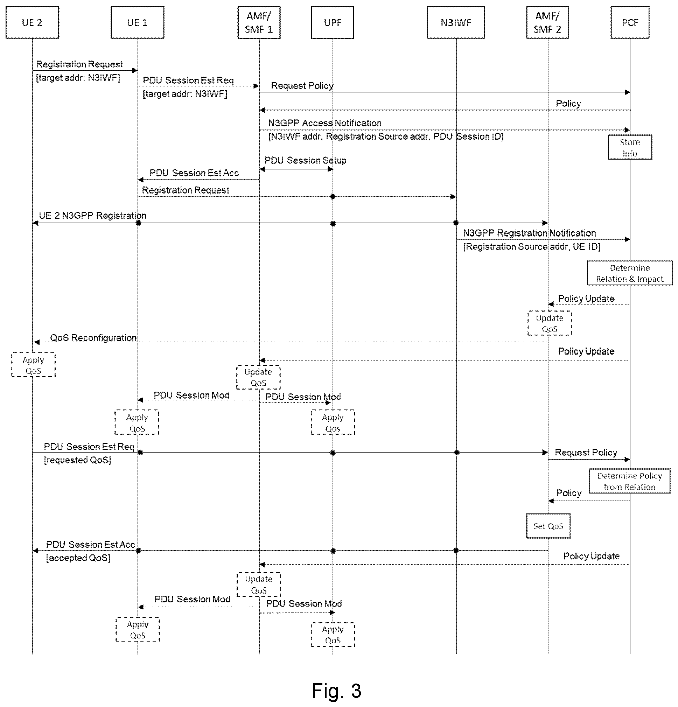

Referring to Fig. 3 there is shown a procedure according a first embodiment of this invention. The embodiment assumes a PLMN as shown in Fig. 2 and already described above. Fig. 3 depicts a message sequence chart for a message exchange in the PLMN comprising of a first and second UE device (UE 1, UE 2), an AMF and an SMF managing the first UE device (UE 1) and its connections, respectively, and shown as a combined entity (AMF/SMF 1). Further, the figure shows a router for routing data of the first UE device (UE 1) between the PLMN and external network (UPF), a N3IWF for UE devices like the second UE device (UE 2) connecting to the PLMN via an untrusted non-3GPP access network, an AMF and SMF managing the second UE device (AMF/SMF 2) and a policy control function (PCF).

As a prerequisite it is assumed that UE 1 is registered in the PLMN via a radio access network of the PLMN (not shown) and UE 2 has a short-range connection, for example a WLAN connection, to UE 1.

According to the procedure, UE 2 attempts to register to a N3IWF of the PLMN by sending a registration request message via the WLAN connection to UE 1, addressing the message to the N3IWF, for example sending the message as an IP-packet having the IP destination address set to the IP-address of the N3IWF. UE 1 receives the message via WLAN and prepares for forwarding the message according to its destination address.

According to this embodiment of the invention, a policy (or rule) configured to UE 1 is configured by the PLMN which requires to set up a new PDU session for every connection with a combination of source device and destination N3IWF for which no PDU session exists. The rule may be configured with a list of N3IWF-addresses of the PLMN. As a result, this rule requires UE 1 to request the establishment of a new PDU session with the target address of the N3IWF. It sends a PDU session establishment request message to its managing AMF/SMF 1.

AMF/SMF 1 requests from the PCF the policy for the setup of this PDU session with a policy request, which is a well-known step in PDU session establishment in networks that use dynamic policy control. In addition, AMF/SMF 1 notifies the PCF about that a connection is requested to a N3IWF with a N3GPP access notification message. The message comprises at least the address of the N3IWF to which a connection is sought, if the PLMN comprises multiple N3IWFs, the address that will appear at the N3IWF as source address for respective messages transmitted via the new PDU session, and the PDU session ID (in the following PDU session 1), which may be accompanied by an identification of UE 1 if the PDU session ID is not unique within the PLMN. Note that in real life the notification to the PCF may be combined with the previous policy request so that only one message is transmitted having all necessary information included. The PCF stores the information from the N3GPP access notification. AMF/SMF 1 will then finalize the PDU session setup by selecting and setting up a UPF for routing traffic of PDU session 1 and transmitting to UE 1 a PDU session establishment accept message comprising initial QoS information and the IP address used for data packets over this PDU session.

UE 1 can now forward the registration request message received earlier from UE 2 over the PDU session via the assigned UPF to the N3IWF. Subsequently, the connection will be used for a non-3GPP registration procedure between UE 2, the N3IWF and AMF/SMF 2 selected to manage UE 2. During the registration, the identity of UE 2 is authenticated and a subscription identifier, in the following UE ID 2, is determined.

According to this embodiment, the N3IWF is configured to notify the PCF about the new registration of a UE device over non-3GPP access providing it with information about the source address to or from which the registration has been set up and an identity of the subscription registered (UE ID 2).

The PCF can now determine from the address information received earlier from AMF/SMF 1 and the registration information received from the N3IWF that the connection of UE 2 to the N3IWF is routed via the PDU session 1 and that thus the QoS of all connections of UE 2 via non-3GPP access to the PLMN is bound to the QoS settings of PDU session 1.

Optionally already at this point the determination that the QoS of PDU session 1 and the whole N3GPP-access of UE 2 are bound may lead to the need to update the QoS settings for either UE 1 or UE 2 or both. Thus, the PCF may send policy update messages to AMF/SMF 1 (indicated as an option with dashed lines in the figure) and AMF/SMF 1 will update the QoS settings and modify the PDU session settings in UE 1 and UPF, respectively. Although no PDU session is setup by UE 2, AMF/SMF 2 may be notified about a policy change und updated QoS may lead to a reconfiguration of UE 2 as well.

At a later point in time UE 2 needs to send or receive data through the PLMN and therefore requests the setup of one or more PDU sessions from AMF/SMF 2 via its N3GPP-connection to the PLMN with a PDU session establishment request message comprising the requested QoS settings. The PCF will be requested to provide the current policy for this new PDU session to AMF/SMF 2. According to this embodiment, the PCF is enabled to use the information about a relation between the N3GPP connection and PDU session 1 to derive QoS constrains for UE 2 and reply to AMF/SMF 2 with policies, rules and/or QoS settings that are adapted to current policies, rules and/or QoS settings of PDU 1. In addition, the PCR is enabled to send a policy update to AMF/SMF 1 in order to request AMF/SMF 1 to change QoS settings of PDU session 1 in UE 1 and the UPF.

The adaption of the QoS settings of UE 1 may for example include the setup of new PDU sessions in parallel to PDU session 1 with each having QoS settings different from the one of PDU session 1. New rules for uplink and downlink traffic routing would then be configured to UE 2 and UPF, respectively, so that for example for the transport of each child security association between UE 2 and the N3IWF, a separate PDU session of UE 1 is used. The PCF would then determine new rules and PDU sessions required from the current PDU session set up or requested by UE 2. QoS rules of UE 1 may also be adapted in a simpler form so that the data rate and latency settings of PDU session 1 suffices the expected maximum quality needs of the combined traffic going over PDU session 1 including all control data traffic and PDU sessions of UE 2.

The adaption of QoS settings of UE 2 may for example include a limitation of data rate or latency limits to values that can be ensured over PDU session 1 and a blocking of use of the connection for too data rate demanding services like video streaming or software updating. The PCF may also refuse any requests for guaranteed bitrate PDU sessions for UE 2 as this would require the related traffic of UE 2 to have higher priority than the traffic of UE 1.

The adaption of QoS settings of UE 2 may for example be limited to QoS settings of a satellite connection UE 1 may be using to communicate with the PLMN. A change in QoS of PDU session 1 of UE 1, for example a handover or switch from satellite-based communication to terrestrial communication, may then lead to a change of QoS for the N3PP-connection of UE 2. Also, the appearance of traffic generated by UE 1 itself, i.e. its user starting a file download, may lead to QoS settings of UE 2 to be changed. Similarly, higher or lower data rate demands of other connected devices using the WLAN connection of UE 1 may lead to degradation or increase of QoS for UE 2.

If UE 2 has a radio access network connection (3GPP access) to the PLMN in parallel to the WLAN connection to UE 1, which is not explicitly shown but also not excluded by Figs. 2 and 3, the QoS settings adapted according to this invention may include configuration of ATSSS rules for routing of data to N3PP-access or 3GPP access. In case PDU session 1 is very limited in data rate or has higher latency, low-latency data or higher data rate service may be routed via 3GPP access while other traffic may use non-3GPP access. In the same sense, rules may be created for PDU session 1 QoS settings of high data rate and/or low latency and rules may be changed for UE 2 if QoS settings of PDU session 1 change, for example after a handover between terrestrial and satellite access of UE 2.

UE 2 may be configured with two or more alternative QoS parameter settings that may include two alternative sets of ATSSS rules. An indication from the network as to which of the alternative QoS settings is to be applied may be transmitted to UE 2 by the network dynamically to adapt to changes in QoS settings of PDU session 1, for example after a handover from a terrestrial connection to a satellite-based connection or vice-versa.

The PCF may also generate new charging policies and provide these to the charging system of the PLMN (not shown in Fig. 3). This may ensure the subscriber of UE 1 is not charged or is charged less for providing PDU session 1. This may also result in a higher than usual charging of the N3GPP-access connection of UE 2. Charging records may, for example, include new information about a usage of a PDU session for transfer of data for another subscriber or for a PDU session of another subscriber. The information may include a subscriber ID and/or PDU session ID and it may be used to adapt the charging of the respective subscribers of UE 1 and/or UE 2.

Is should be noted that the PCF is an arbitrarily selected network function performing the steps described. Any other network function, known or new, can also be configured to perform this functionality. In that case, the PCF would perform the well-known functions of a PCF described above and steps may as a whole or in parts be performed by the other entity.

It should also be noted that the N3IWF is a term for a gateway for untrusted or trusted access to a PLMN used by 3GPP for 5G networks. The same functionality and similar implementation of this invention can by performed by any other gateway with the same or similar functionality and in any network. The invention can for example be implemented with an ePDG in an LTE (4G) core network.

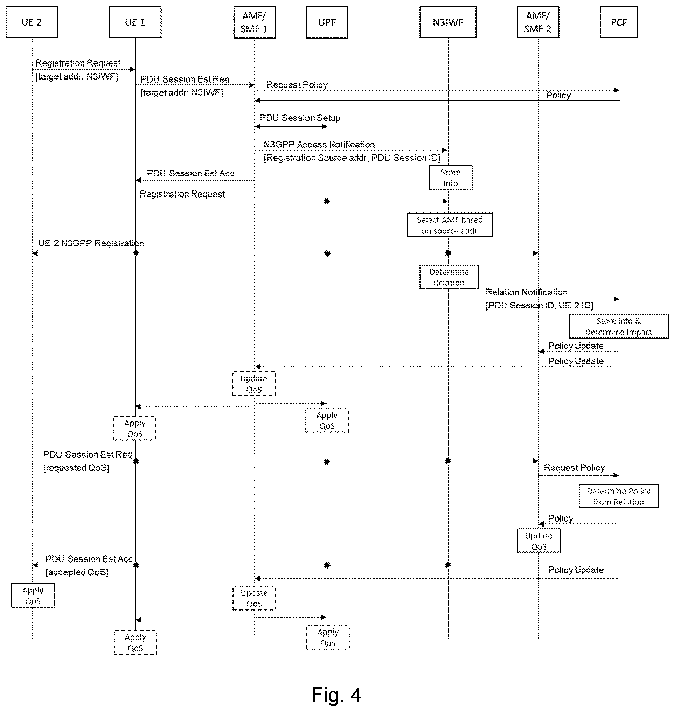

Fig. 4 depicts a procedure according to a second embodiment described earlier. The setup in this embodiment is the same as in the previous embodiment and shown in Fig. 2. Therefore, the second embodiment is only described where it differs from the first one.

UE 2 transmits via the WLAN connection to UE 1 a registration request message targeted to the N3IWF of the PLMN. UE 1 is again configured to request establishment of new PDU session (in the following first PDU session) for transport of this message and further data with relation to UE 2. AMF/SMF 1, as a normal part of the PDU session setup procedure, requests and receives policy information from the PCR. With this, the PDU session establishment procedure is performed and a PDU session establishment accept message is transmitted back to UE 1.

According to this embodiment, the N3IWF addressed in the registration request message, or another N3IWF of the PLMN, is notified about the attempt of UE 2 to access the N3IWF, the notification message comprising the IP address used for data of the newly set up PDU session and the PDU session's ID (PDU session 1). If the PDU session ID is not unique within the PLMN, it may be accompanied by a subscription ID (UE ID 1). The N3IWF stores the information.

Now, UE 1 forwards the received registration request message over PDU session 1 and via the UPF to the N3IWF. The N3IWF determines a source address from the registration request message and determines from this source address and the information of the address used for PDU session 1 stored earlier, that the non-3GPP access of the requesting UE device (UE 2) is provided by PDU session 1 and potential UE ID 1.

For finalization of the registration and authentication of UE 2 an AMF is selected to manage UE 2. This AMF selection is performed by the N3IWF at least in parts on the base of the determined relation of the non-3GPP connection and PDU session 1. The AMF selection is based on policies configured in the N3IWF. It may also involve providing UE ID 1 to another network entity to identify the AMF managing UE 1 and selecting the same AMF. The selection may also be based on a policy providing one or more specific AMFs of the PLMN that are specialized on the support of the current invention. After AMF selection by the N3IWF, the registration of UE 2 in the PLMN takes place during which the subscription of UE 2 is identified (UE ID 2).

According to this embodiment, the N3IWF notifies the PCF about the relation of UE 2 and PDU session 1 in a relation notification message. The PCF stores the information and determines potential impact on QoS of PDU session 1 and QoS of UE 2. The potential immediate QoS update and later QoS modification in relation to one or more PDU session establishment procedures triggered by UE 2 over the non-3GPP access are the same or similar to the first embodiment and therefore omitted from the description of this embodiment. In principle, in this embodiment, the PCF is enabled, as in the first embodiment, to ensure an alignment of QoS for PDU session 1 and non-3GPP access connections of UE 2.

In one embodiment of the invention, the entity that determines a relation between PDU session 1 and non-3GPP access connections of UE 2 is a new function of the 5G core network of the PLMN similar to the description in the first embodiment, but the function is co-located with the N3IWF or it is part of the N3IWF, so that the combination of both the new function and the N3IWF implement an embodiment similar to the second embodiment.

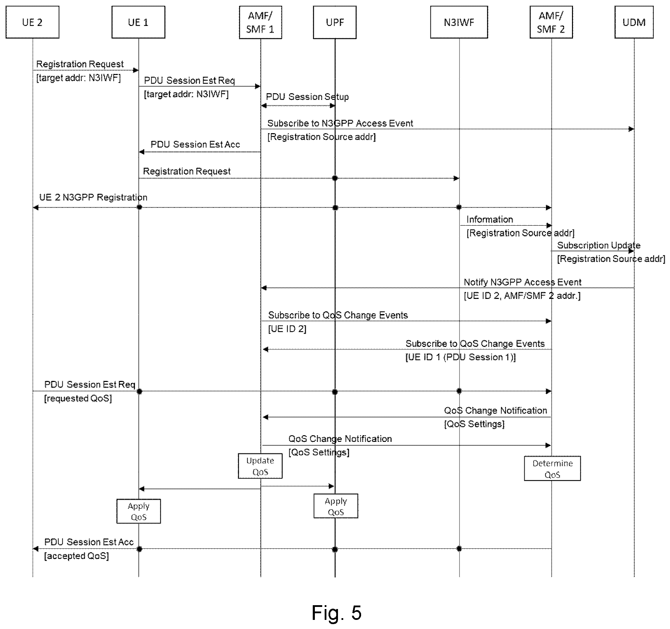

A procedure according to a third embodiment is now described in relation to Fig. 5 with a focus on the differences to the first and second embodiments. In this procedure, there is no explicit second network entity as described in the previous embodiments, the functionality of the second network entity of the first two procedures is distributed to the AMFs (AMF/SMF 1, AMF/SMF 2) that manage the first and second UE device (UE 1, UE 2) and the subscriber data base (UDM) of the PLMN. This distribution is just an example and other existing network entities may be involved. As in this embodiment the PCR does not contribute to the steps performed in this embodiment, it is not present in the figure while it is obviously assumed to perform the known policy related functions that have also been described before.

Again UE 2 is connected to UE 1 via WLAN and attempts to send a registration request message addressed to the N3IWF. UE 1 requests the establishment of a new PDU session from AMF/SMF 1 and the PDU session setup procedure is performed in the PLMN (shortened in the figure to a single arrow showing the involvement of the UPF). According to this embodiment, the AMF derives from the parameters of the requested PDU session, i.e. the target address being an address of a N3IWF of the PLMN, that a non-3GPP registration of a yet unknown device is prepared and stores this information. As a result, the AMF requests from the subscriber database (UDM) of the PLMN to be notified of any occurrence of a newly created event called N3GPP access event and details the event by providing the source address used for transmitting data of the PDU session newly set up. With this request for notification, the AMF requests the UDM to be informed when any UE device registers successfully via a N3IWF from the provided address.

UE 1 can now forward the registration request via the newly set up PDU session, and a N3GPP registration procedure takes place between UE 2, the N3IWF and AMF/SMF 2 during which the subscription of UE 2 is identified (UE ID 2). According to this embodiment the communication between N3IWF and the AMF is enhanced so that the source address of the non-3GPP access used for registration is provided to the AMF by the N3IWF, either in a separate message (as shown in the figure) or (more likely) as part of the registration procedure. The AMF then updates the UDM about the successful registration and this update is enhanced by this invention by the source address provided by the N3IWF. An alternative to the message flow described would be that the N3IWF updates the subscription at the UDM and thereby directly provides the source address.

Based on the provided source address, the UDM derives that the N3GPP access event for which the AMF of UE 1 (AMF/SMF 1) requested to be notified, occurred and notifies the AMF. Within the notification it identifies UE 2 and its AMF (AMF/SMF 2). As a result, the AMF of UE 1 requests to be notified about QoS change events of UE 2. This request for notification may inform AMF/SMF 2 about the relation between QoS of the non-3GPP access of UE 2 to the QoS of UE 1. Alternatively, AMF/SMF 2 is made aware of this relation explicitly. For example, AMF/SMF 1 could send a notification message to AMF/SMF 2 providing the information about the relation, or AMF/SMF 1 could inform the UDM which in return informs AMF/SMF 1. In one example an implicit request for notification of AMF/SMF 2 at AMF/SMF 1 is assumed, i.e. while AMF/SMF 1 requests explicitly from AMF/SMF 2 to be notified, it acts immediately as if SMF/SMF 2 requested notification about all QoS change events of the respective PDU session of UE 1. An implicit request for notification may be accompanied by an immediate notification, as if the QoS change event had occurred. All of the above alternatives are shown in the figure as a mutual request for notification of the two AMFs. While AMF/SMF 1 is notified about all events relating to QoS of UE 2, AMF/SMF 2 is only notified about events relating to the first PDU session used for transport of data to and from UE 2. AMF/SMF 1 may also notify AMF/SMF 2 about potential QoS, i.e. QoS settings that could be achieved or configured for the respective PDU session but that are currently not applied.

In one embodiment, when UE 2 requests a PDU session for data transfer with a requested QoS, AMF/SMF 2 notify AMF/SMF 1 about the requested QoS and the resulting QoS change for UE 2. AMF/SMF 1 can then determine whether this requested QoS can be achieved for the first PDU session of UE 1 and notify AMF/SMF 2 about an actual or potential change in QoS for the first PDU session. Based on that QoS information the AMF/SMF 2 can determine the QoS accepted for the PDU session requested by UE 2 and can finalize the PDU session establishment. In a similar way, relevant changes of PDU sessions of UE 1 and 2 will lead to notifications and thus QoS settings can be aligned by the core network between the UE devices.

## Claims

1. A method of establishing a connection of a communication device to a communications network over a non-3GPP interworking function, N3IWF, entity the method comprising:
a user equipment, UE, device establishing a connection with the communication device;
receiving at the UE device a registration request from the communication device, the registration request indicating that the communication device requires a connection to the N3IWF entity,
establishing a connection of the UE device to a first data network providing access to the N3IWF and a connection of the communication device to the data network via the connection of the UE device to the first data network, and
adapting a quality of service setting of the connection of the UE device to the communications network to take into account a quality of service requirement for the connection of the communication device to the first data network via the UE device.

2. The method according to claim 1, wherein a quality of service setting for a subsequent connection of the communication device to a further data network is adapted to the quality of service setting for the connection of the UE device to the first data network.

3. The method according to claim 1 or claim 2, wherein the communication device has in addition to the connection to the data network via the UE device a direct connection to the communications network and wherein the quality of service setting of the connection of the UE device to the first data network is taken into account for determining rules governing whether data of a particular data type are transferred via the direct connection or via the connection via the UE device.

4. The method according to any preceding claim, wherein the communication device is a second UE device registered in the communications network.

5. The method according to claim 1, wherein the communication device transmits to the UE device a request for registration addressed to the N3IWF entity, the UE device requests a setup of a new connection to a data network providing access to the N3IWF entity and after the new connection has been setup the N3IWF registers the communication device over the new connection and provides the communications network with information about the registration enabling the communications network to determine that the connection of the communication device is provided by the UE device.

6. The method according to claim 5, wherein:
the UE device receives address information as a result of the setup of the new connection from the communications network;
the UE device forwards the request for registration to the N3IWF entity over the new connection using the address information; and
the information about the registration is provided by the N3IWF to the communications network and comprises the address information determined by the N3IWF entity during the registration of the communication device.

7. The method according to claim 6, wherein the adapting a quality of service setting of the connection of the UE device to the communications network is based on a determination that the connection of the communication device is provided by the UE device.

8. The method according to claim 1, wherein the adapting of the quality of service setting comprises setting up a new packet data unit, PDU, session in parallel with an existing PDU session.

9. The method according to any preceding claim, wherein a charging policy in respect of usage of the UE device is adapted to take into account the connection of the communication device to the data network.
